# EUROPEAN PATENT SPECIFICATION

(11) **EP 3 428 415 B1**
(45) Date of publication and mention of the grant of the patent: **23.02.2022**
(21) Application number: 18183559.6
(22) Date of filing: 13.07.2018
(51) Int. Cl.: F01N 3/08, F01N 3/20, F02M 26/00, F02M 26/06, F02M 26/15, F02M 26/35, F01N 3/031, F01N 3/032, F01N 9/00, F01N 13/00, F02D 41/00, F02M 26/05, F02M 26/23, F02M 26/24, F01N 3/025, F01N 3/035, F01N 3/10, F02D 41/02, F02D 41/40

(54) **POLLUTANT ABATEMENT SYSTEM OF AN INTERNAL COMBUSTION ENGINE, INTERNAL COMBUSTION ENGINE COMPRISING THE ABATEMENT SYSTEM AND METHOD FOR THE POLLUTANT ABATEMENT**
ABGASNACHBEHANDLUNGSSYSTEM EINER BRENNKRAFTMASCHINE, BRENNKRAFTMASCHINE MIT SOLCHEM ABGASNACHBEHANDLUNGSSYSTEM UND METHODE FÜR DAS ABGASNACHBEHANDLUNGSSYSTEM.
SYSTÈME D'ÉPURATION DE GAZ D'ÉCHAPPEMENT D'UN MOTEUR À COMBUSTION INTERNE, MOTEUR AVEC UN TEL SYSTÈME D'ÉPURATION ET MÉTHODE POUR LE SYSTÈME D'ÉPURATION

(30) Priority: 13.07.2017 IT 201700079332; 31.10.2017 IT 201700124352
(43) Date of publication of application: 16.01.2019
(73) Proprietor: FPT Industrial S.p.A., 10156 Torino (IT)
(72) Inventor: D'EPIRO, Clino, 10091 Alpignano (TO) (IT)
(74) Representative: Studio Torta S.p.A.

(56) References cited:
- DE-A1-102015 108 896
- GB-A- 2 418 376
- US-A1- 2015 113 961
- US-A1- 2016 377 006

## Description

### Field of application of the invention

The present invention relates to the field of so-called posttreatment devices of exhaust gases of an internal combustion engine.

'Pollutant abatement systems' or 'treatment systems' are equivalent expressions.

### Prior art

Legislation on harmful emissions for land vehicles is becoming increasingly restrictive and it is therefore imperative to identify individual devices or sets of interconnected devices in order to reduce pollutant emissions.

Devices such as
DPF = particulate filter for Diesel engines, also known as the Gasoline Particulate Filter (GPF) for eight-cycle engines.
NSC = NOx trap, converts NO to NO₂ and stores it until N02 needs first to be reduced to NO and then to N2 by a so-called regeneration process which must be conducted in an oxygen-free and HC-rich environment, it generally comprises rhodium;
PNA = Passive NOx adsorber, i.e. a device capable exclusively of storing and releasing NOx without any ability to convert it to N2 as instead an NSC does; further details on PNAs are described in US20130294990; the PNA is incapable of any conversion of NOx.

Although there are substantial differences between PNA and NSC, both fall within the family of NOx traps, usually called LNT (Lean NOx trap).
DOC = diesel oxidising catalyst,
SCR = a selective catalyst that uses ammonia to break down the NOx contained in the exhaust gases, it performs this abatement when properly filled with a urea-based reducing agent, which is then injected into the flow of exhaust gas upstream of the SCR by means of appropriate metering means; SCRoF = an SCR that also has filtering capabilities of carbon particulate, such as a DPF; in other words, it is a DPF, the inner walls of which are suitably filled with catalytic substances able to convert the NOx in the presence of a urea-based reducing agent such as an SCR;
CUC = ammonia reducer, it is generally used as the last component of the ATS in order to avoid releasing ammonia into the environment, which would contribute to increasing the number of pollutants released into the environment. These are well known to the person skilled in the art and their abbreviations are acronyms of equally well-known English expressions.

They are generally used in diesel cycle engines.

The three-way catalyst, on the other hand, is universally known in the world of eight-cycle engines, i.e. spark ignition.

US20160084185 shows an example of implementing a PNA in tandem with an SCR.

According to this configuration all the released NOx are fully converted by means of an SCR arranged downstream of the PNA.

The SCR therefore remains inactive as long as the PNA accumulates NOx and then, when the PNA begins to empty by releasing the previously stored NOx, the SCR converts it. GB2418376 shows a configuration in which a rhodium-free LNT and therefore a PNA is implemented in a scheme according to which the desorbed NOx is recirculated to the input of the engine.

If two PNAs are not implemented in parallel, during the regeneration of the single PNA the exhaust gases are not treated or are only partially treated.

US201500113961 shows a scheme very similar to that shown in GB2418376, but in which an NSC is implemented and therefore the relative regeneration products are directed in input to the internal combustion engine. Also, in this case, if two NSCs are not implemented in parallel, during the regeneration of the single NSC, the NOx produced by the combustion engine is not treated or is only partially treated.

### Summary of the invention

The purpose of the present invention is to improve the performance in terms of abatement of pollutants of an LNT-based ATS.

Another purpose of the present invention is to decrease the consumption of urea-based reducing agent.

These purposes are achieved by means of an exhaust gas treatment device designed to be connected downstream of an internal combustion engine to treat the relative exhaust gases and a related operating strategy, as set forth in independent claims 1 and 22, respectively.

The basic idea of the present invention is to implement a first portion of ATS comprising a NOx trap (PNA or NSC) and to connect, during the emptying of the trap, the output of the first portion of ATS with the input of the internal combustion engine, so as to redirect all the NOx released by the PNA to the internal combustion engine. As a result, the internal combustion engine acts as an abatement device of the NOx in the case of PNA and of the regeneration products in case of NSC.

During the emptying of the trap a portion of the exhaust gases produced by the internal combustion engine is directed directly to the second portion of ATS by a bypass duct that bypasses the first portion of ATS. As a result, this portion of exhaust gases is directed to the second portion of ATS directly, i.e. without passing through the first portion of ATS.

Alternatively, two first ATS portions arranged in parallel are provided in order to always have at least one first portion operative.

According to a preferred variant of the invention, upstream of the first portion of ATS a third portion of ATS is arranged, which includes a DOC. More preferably said third portion includes a DOC and a DPF or a so-called cDPF, i.e. a particulate filter filled as a catalyst, to also perform the DOC function.

According to the invention, the presence of a bypass duct, arranged parallel to the first portion of ATS, makes it possible to choke the flow passing through the NOx trap in the emptying (PNA) or regeneration (NSC)condition, to control the release of the NOx or of the regeneration products, which is a function at least of the temperature of the NOx trap itself.

As a result, when the SCR is not yet perfectly efficient to reduce NOx accumulated in various combustion cycles of the internal combustion engine and rapidly released by the PNA, depending on the operating conditions of the internal combustion engine itself, it is possible to reduce from 20% to 60% of the pollutants released by the NOx trap.

As a result, the configuration described achieves a dual result:
I t allows the control of the NOx release conditions by choking the flow of exhaust gas passing through it and precisely controlling the SPACE-VELOCITY and the lambda flow;
I t allows a reduction of 20% to 60% of the NOx released by the said internal combustion engine;
I t allows control of the emissions also during the release phase of NOx or regeneration products.

The bypass duct connects to the exhaust pipe between a first point immediately upstream of the first treatment portion and a second point downstream of the first treatment portion. Between said first treatment portion and said second point, the recirculation pipe is connected to the intake manifold of the internal combustion engine. Between said second and said third point, i.e. between the recirculation pipe inlet and the bypass duct outlet, a valve is arranged to connect the first portion of ATS with the combustion engine inlet and simultaneously isolate the first portion of ATS from the second portion of ATS.

This valve is preferably a two-way valve of the type adjustable in opening/closing or is of the ON/OFF type.

The recirculation pipe may be provided with a second regulating valve for regulating the flow of exhaust gas passing through the first portion of ATS when the first valve completely blocks the outlet of the first portion of ATS towards the second portion of ATS.

If the first valve is of adjustable type, then it is possible to choke the flow of exhaust gas passing through the first portion of ATS regardless of whether it is then recirculated or not, i.e., regardless of the opening/closing condition of the second valve.

Since the SCR, located downstream of the NOx trap, is usually exposed to a temperature of at least 20°C below that of the NOx trap, this means that when the NOx trap starts to release stored NOx or to regenerate in an oxygen-free environment at a temperature of about 200 - 250°C, the SCR is not yet fully efficient, since its activation temperature and maximum efficiency is at least 250°C.

According to the present invention, the amount of NOx that hits the SCR when it starts to activate is significantly reduced and can be suitably modulated over time by adjusting the portions of exhaust gas divided between the first portion of ATS and the relative bypass duct.

As a result, the present invention relates to both an ATS scheme and a method of controlling it.

According to a preferred control strategy of the device according to the invention, the first valve starts to open shortly before, in terms of temperature, the PNA reaches the emptying temperature, so that the portion of exhaust gas directly reaching the second portion of ATS can further raise its temperature, preventing the PNA from starting to release NOx prematurely. In this phase, the second valve, if opened, produces a "traditional" recirculation of exhaust gas. Conversely, during the emptying of the NOx trap, the NOx accumulated in several previous combustion cycles, is recirculated.

In particular, during emptying, the second valve allows the adjustment of the flow rate of the exhaust gas crossing the PNA to achieve a space-velocity target value. In particular, it is configured to maintain said flow rate optimal by compensating for a change in the engine operating point. According to a preferred variant of the system according to the present invention, fuel metering means are arranged upstream of the first portion of ATS, in particular, between the inlet of the bypass duct and the inlet of the first portion of ATS or, immediately upstream of the bypass duct inlet. Said bypass duct inlet is associated with said first point of the exhaust pipe.

The term fuel is understood to mean the same fuel used by the internal combustion engine to burned in at least one combustion chamber.

When the fuel metering means are arranged between the inlet of the bypass duct and the inlet of the first portion of the ATS, this is extremely advantageous, since when the exhaust gas entering the first portion of ATS is less than the entire flow produced by the internal combustion engine, a proportional decrease in heat input is compensated by injections of said fuel, which thus performs the function of heating the NOx trap as well as enriching the working atmosphere with HC, when the trap is made by means of an NSC, facilitating its emptying. In addition, the NOx trap tends to release NOx at lower temperatures than the aforesaid 250° in a saturated HC atmosphere. As a result, even if the temperature is not particularly high since most of the exhaust gas is directed towards the second ATS portion, the release of NOx can be achieved by fuel injections into the NOx trap.

Furthermore, the fuel to be injected is very little since proportional to the reduced amount of oxygen to be neutralized contained in a portion of the entire flow of exhaust gas produced and in any case such HCs are fully recovered at the intake of the combustion engine by means of the recirculation pipe. The presence of such HCs at the intake can be taken into due account by the ECU, which can consequently reduce the fuel injected into the cylinder (s). When, on the other hand, the fuel metering means are located upstream of the bypass duct inlet, its contribution is equivalent to post-fuel injections carried out during the expulsion of exhaust gas from the at least one combustion chamber. The thermal effect obtained involves both the first portion of ATS and the second portion of ATS directly, i.e. through the bypass duct. In this second case, it is also appropriate to provide the second portion of ATS with a DOC to neutralize the HC reaching the second portion of ATS. Advantageously, the presence of the fuel metering means, especially when arranged downstream of the first point, is appropriate, to obtain an accurate control of the release of NOx during the emptying of the PNA since this makes it possible to control the operating state, including temperature, of the NOx trap almost independently of the heat contributed by the portion of exhaust gas passing through it, being able to count on the presence of residual oxygen and the behaviour of the PNA which tends to release at relatively lower temperatures in an atmosphere rich in HC.

It is evident that said fuel metering means, when present, are completely independent of the injectors with which the relative combustion engine is equipped.

According to the invention, in addition to the NOx trap, in the same canning, or in a separate canning an SCR may be housed for example which contributes to defining the first treatment portion. This implies that such a device can contribute to the abatement of substances released by the NOx trap when the output of the first treatment portion is directly connected with the engine intake manifold, or may in turn be regenerated, also making for the post-combustion of the relative regeneration products in the internal combustion engine.

A pollutant abatement system (ATS) of an internal combustion engine according to claim 1 is the object of the present invention.

An internal combustion engine comprising said pollutant abatement system is also the object of the present invention. The dependent claims show preferred variants of the present invention, forming an integral portion of the present description.

### Brief Description of Drawings

Further purposes and advantages of the present invention will be evident from the following detailed description of an example of an embodiment (and variants thereof) and the accompanying drawings, provided purely for explanatory and non-limiting purposes, wherein:
Figure 1 shows a diagram of an internal combustion engine comprising the pollutant abatement system according to the present invention in a second operating condition,
Figure 2a shows a part of the previous diagram with more details and in a first operating condition, according to a first variant of the invention;
Figure 2b shows a part of the previous diagram with more details and in a first operating condition, according to a second variant of the invention;
Figures 2c -2f show further variants of the same portion of the diagram as Figures 2a and 2b;
Figure 3 shows an example of an ATS not according to the present invention;
Figure 4 shows a variant of the invention according to which two casings (cannings) are inserted in the recirculation circuit shown in figure 1;

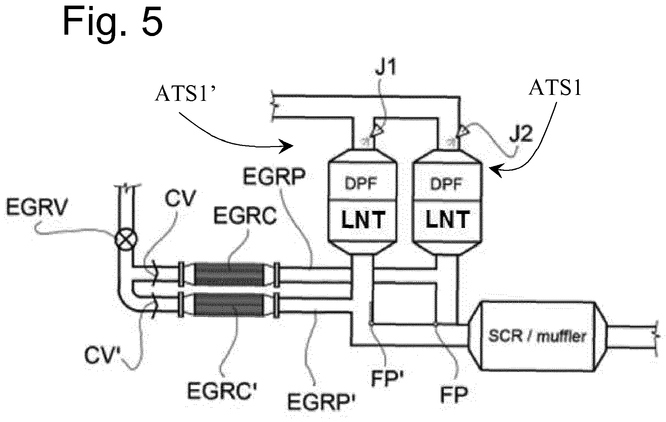

Figure 5 shows a variant of the invention with two first portions of the treatment device arranged mutually in parallel;
Figure 6 shows a preferred variant of the invention wherein the internal combustion engine comprises a donor cylinder.

The same reference numbers and letters in the figures identify the same elements or components.

The terms "upstream" or "downstream" are understood as in relation to exhaust gas circulation if reference is made to ATS or to fresh air circulation entering the internal combustion engine if reference is made to the intake manifold of the internal combustion engine.

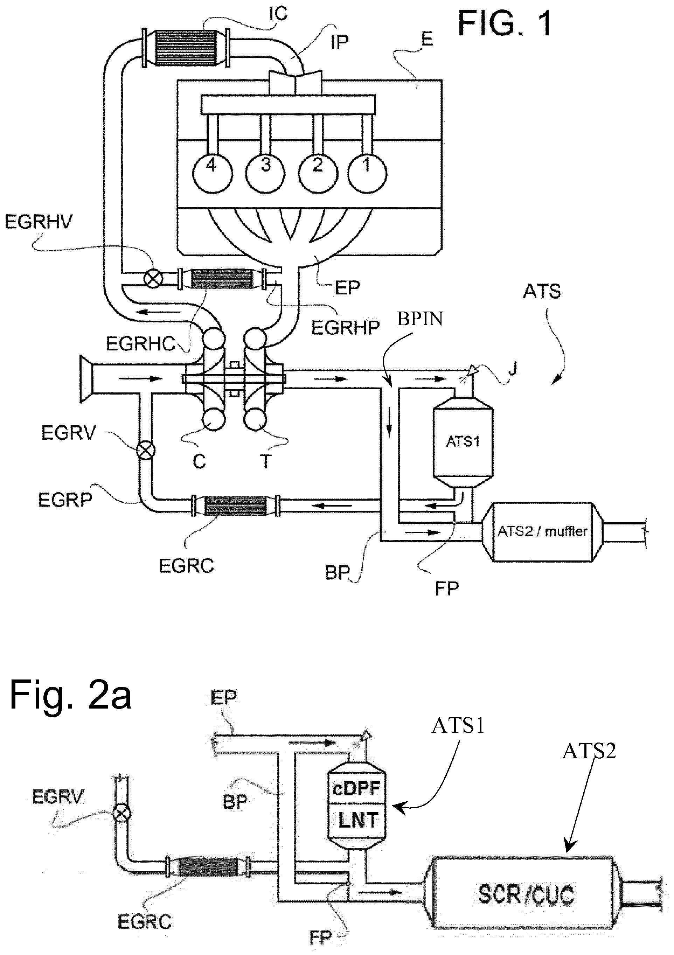

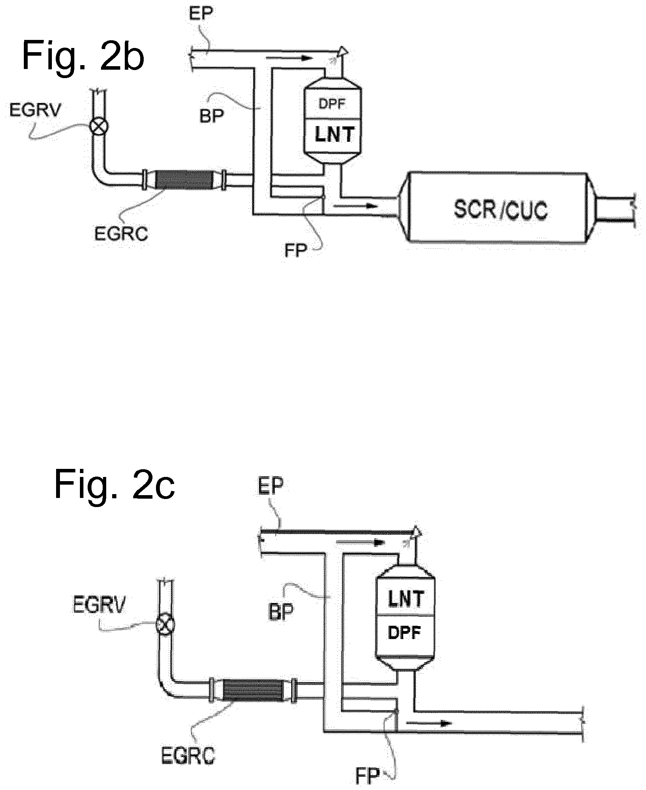

Figures 2c - 2f do not show a portion present in Figures 2a and 2b, for illustrative convenience only. This portion may therefore also be present in the configurations of Figures 2c - 2f.

As used herein, the term "second" component does not imply the presence of a "first" component. These terms are only used for clarity and should not be understood as limiting.

### Detailed description of embodiments

The present invention relates to an internal combustion engine E comprising one or more cylinders 1 - 4 with relative injectors suitable for injecting fuel into a respective cylinder during compression and/or intake.

Generally, in diesel engines the fuel is injected during compression, while in spark ignition engines, the fuel is injected during intake and possibly also in the subsequent compression phase.

The internal combustion engine E, hereinafter simply "engine" comprises an IP intake pipe through which fresh air is sucked in from the external environment and an exhaust pipe EP through which exhaust gases are released into the external environment.

An ATS exhaust gas treatment device comprising at least a first treatment portion ATS1 having at least one PNA or NSC exhaust gas treatment device is arranged on the exhaust pipe. Some figures are generalized indicating a generic NOx trap with the LNT symbol. According to the case in point, it is preferred that said trap is made by means of a PNA or an NSC.

A PNA, as mentioned above, is only able to adsorb NOx and release it when it reaches a so-called emptying temperature ranging from 200 to 250°C depending on the formulation of the inner coating of the matrix (core) of said device. This release is also influenced by operating conditions and in particular by an atmosphere saturated with HC.

An NSC is influenced to approximately the same extent as the PNA with regard to regeneration (which in the PNA is mere emptying) but it, in addition to the Platinum and Barium used to oxidize NOx to N02 and to reverse them as compounds with Barium, contains Rhodium and/or other reducing catalysts and therefore releases regeneration products that also include ammonia.

According to the present invention, the first portion ATS1 of the ATS comprises a bypass duct BP that makes it possible to at least partially bypass the first portion of ATS1.

So that the flow of exhaust gas produced by the internal combustion engine can be divided into a first portion which crosses ATS1 and a second portion passing through the bypass duct.

Depending on the operating conditions, the ratios may vary. For example, when the engine is cold, the bypass is completely closed (see Figures 2a - 2c) and the first exhaust gas portion coincides with the entire gas flow produced by the internal combustion engine E.

To allow the second exhaust gas portion not to pass through the ATS1, said bypass duct BP is arranged on the exhaust pipe and connects a first point upstream of the first treatment portion ATS1, with a second point, downstream of said first treatment portion ATS and upstream of a second portion ATS2 that contributes to defining the entire ATS. According to the invention, an EGRP circulation duct connects a third point, arranged between the first ATS1 treatment portion and said second point. A second EGRV adjustment valve is optionally housed on said EGRP circulation duct.

The second ATS2 portion of ATS is completely optional and depends on what is housed in the first treatment portion. In the second ATS2 portion of ATS at least one SCR is housed and optionally one CUC arranged downstream of the SCR, so as to neutralize the NOx residues released by the PNA and recirculated through the internal combustion engine.

When in fact an NSC is used as a trap, the major regeneration products are HC and NH3 and therefore, the presence of a second treatment portion and especially a SCR contained in it is completely optional, as these products are almost completely neutralized by recirculating them in the internal combustion engine.

A first FP valve allows the bypass to be activated, in the emptying condition, blocking the direct connection between the first ATS1 portion and the second ATS2 treatment portion (see figure 1). Thus, the first exhaust gas portion is forced to recirculate integrally towards the inlet of the engine E, while the second exhaust gas portion reaches the second ATS2 portion through the bypass and then the external environment. In order to facilitate the heating and release of NOx by the NOx trap, it may optionally be provided that the engine injectors E are able to perform post-injections in the relevant cylinders i.e. fuel injections in the exhaust phase of the combusted mixture in the exhaust pipe. Alternatively, a fuel injector J may be provided on the exhaust pipe preferably between the inlet of the first treatment portion ATS1 and the BPIN inlet of the bypass duct BP, as shown in the figures.

As will be seen later, both techniques can be implemented simultaneously but with different effects.

Alternatively, the fuel metering means J may be arranged upstream of the bypass duct BPIN inlet. In this case, its effects are found on both the portions of exhaust gas equivalent to post-fuel injections.

When the bypass is active and the NOx trap of the ATS1 is controlled to release NOx or regenerate, said post-injections or said fuel injector J are active.

Conversely, when the bypass is off, the recirculation duct functions as any EGR device and the EGR portion can be fixed and given by the ratio of the duct cross-sections, alternatively and preferably, a second EGRV adjustment valve is arranged on the EGRP recirculation duct so as to regulate the recirculated EGR flow.

When an SCR is expected to be present in an ATS2, when the SCR activation temperature has been exceeded, after the complete emptying/regeneration of the LNT, the bypass may remain active and the LNT completely isolated for heavy duty applications or, for light duty applications, the bypass may be closed and the LNT may be reintroduced into the exhaust gas flow path without intervening in the treatment of it. In fact, above predetermined temperatures, the LNT is not able to adsorb NOx and therefore does not intervene in the treatment of exhaust gases. However, this entails its ageing due to the high temperatures at maximum load, which can be tolerated in light duty vehicles, but cannot be tolerated for heavy duty vehicles.

Figure 2a shows a solution particularly suited to a light duty implementation.

The first ATS1 portion comprises, upstream of the NOx trap, a cDPF, i.e. a loaded DPF, e.g. platinum-based, i.e. also capable of operating as a DOC.

Figure 2b provides a simple DPF (not filled) upstream of the trap.

If necessary, the cDPF may be replaced by a DOC+DPF sequence. This succession is consistent with the exhaust gas flow. The second ATS2 portion of ATS, when present, may comprise only one SCR and optionally one CUC arranged downstream of the SCR.

According to this preferred variant of the invention, the bypass is active during the emptying/regeneration phase of the LNT and even before emptying/regenerating the same LNT is partially active possibly to favour heating of the second ATS2 portion, but once the light on temperature of the SCR has been reached and the complete emptying/regeneration of the LNT has been achieved, the bypass is completely closed, as shown in Figure 2a, except in the case of further strategies for using the bypass ducts, for example at high loads. In such case, the EGRC recirculation duct may function as a traditional EGR and therefore it may be advantageous to introduce an EGRC cooler on such duct to cool the recirculated exhaust gases.

Figure 2b shows a more suitable solution in heavy duty applications, where it is expected that when the SCR, housed in ATS2, becomes active, i.e. reaches the light on temperature, the PNA is short-circuited on the intake duct of the internal combustion engine E until it is completely emptied and, subsequently, is completely isolated from the flow of exhaust gases so as to avoid ageing.

As a result, the following are identified,
a first phase in which the first FP valve closes the bypass and the second EGRV valve can be either closed or open like a normal EGR valve,
a second phase in which the FP valve completely opens the bypass and disconnects ATS1 from ATS2, while the second valve regulates the distribution of the exhaust gas between the first portion that is recirculated and the second portion of exhausted gas that directly reaches ATS2;

In the case of heavy duty applications, a third phase (first) is identified in which the first FP valve completely stops the connection between ATS1 and ATS2 while the second valve is completely closed, consequently the NOx trap is completely isolated. While, in the case of light duty, a third phase (second) is identified in which the first FP valve completely restores the connection between ATS1 and ATS2, with the bypass BP closed, while the second valve can operate as a normal EGR valve.

A fourth phase may be present for both configurations when one wishes to help the SCR (or SCRoF) present in ATS2 to reach the light on temperature when EGRV is closed, while FP if adjustable allows choking of the flow part through ATS1 and the flow part through the bypass duct.

In the above-mentioned second phase, the EGRV valve is preferably actuated as a function of the PNA emptying process rather than of the reduction of NOx produced by the engine E. These can in fact be reduced also by intervening on other engine operating parameters such as
i njection times,
i f the engine is positive-ignition, on the ignition advance; if the motor is equipped with adjustable valve lifts on the intersections of the intake and exhaust valves, for example by creating internal EGR.

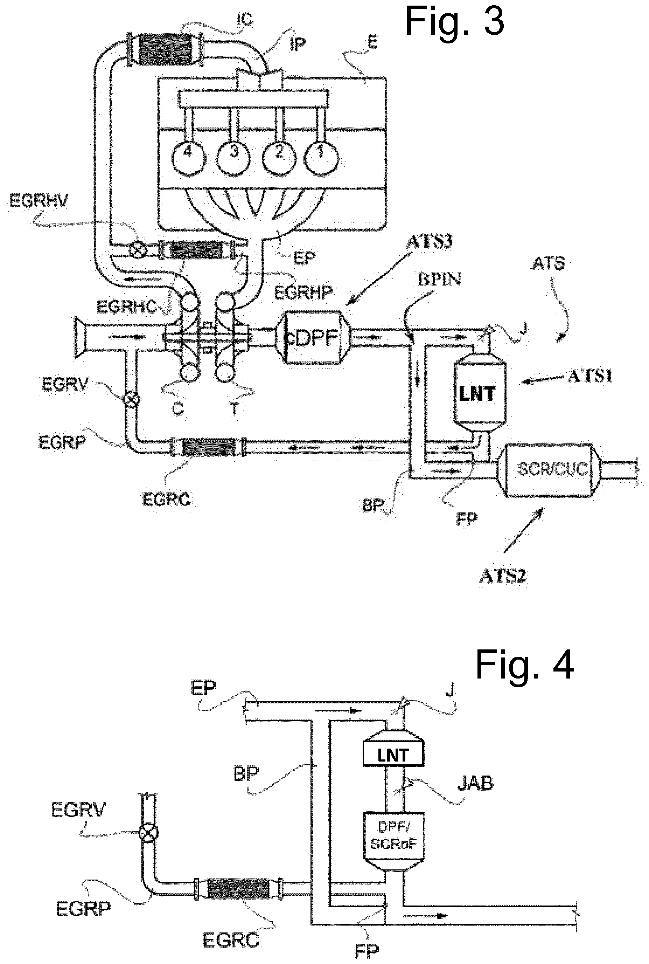

Or they can be reduced by further EGR devices as shown below, for example with reference to the high pressure EGR device (EGRHP, EGRHV, EGRHC) shown in Figure 3 or by means of the donor cylinder shown in Figure 4.

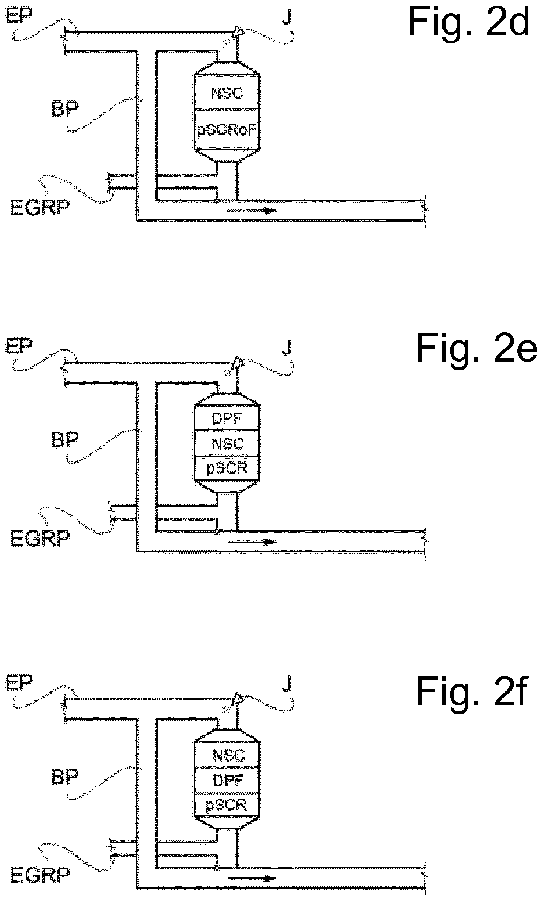

Figure 2c shows the inverse order with respect to Figures 2° and 2b between the particulate trap and the NOx trap. In particular, the NOx trap is arranged upstream of the particulate trap. This implies that the particulate trap does not regenerate naturally.

Figures 2d - 2f show a combination of components arranged in the first treatment portion in which the peculiarities of the NSC are exploited. This, in fact, during regeneration, generates ammonia that can be used in a passive SCR pSCR to neutralize the NOx that releases the NSC or that crosses the same NSC during regeneration.

In such configurations, although optional, the particulate filter can be present both as SCRoF filter (SCR on Filter), i.e. a component capable of operating both as SCR and as a particulate filter, and as an autonomous device arranged upstream of the NSC or downstream of the NSC according to at least the combinations shown in these figures. Advantageously, during the regeneration of the particulate filter, the PM5 particulate rather than being released into the environment is recirculated to the intake manifold of the engine E, as shown with regard to the NOx trap. Therefore, as described below, specific regeneration techniques may be provided to regenerate the NOx and particulate trap in succession according to the order of housing in the canning of the first treatment portion.

According to the example not according to the invention shown in figure 3, a third ATS3 portion of ATS is identified. It consists of a portion of ATS arranged on the exhaust pipe EP upstream of the bypass duct BP. This third ATS3 portion includes a DOC or a cDPF or a DOC+DPF assembly. These components are out of the loop affecting the first treatment portion and therefore it is always crossed by the entire flow of exhaust gas even during the emptying/regeneration of the first treatment portion. The presence of this third treatment portion does not imply the presence of the second treatment portion. In addition, it is always crossed by the entire flow of exhaust gas produced by the engine.

The symbol "/" in the formulation "emptying/regeneration" means that if the trap consists of a PNA then once the desorption conditions of the stored NOx are reached, the PNA is emptied. When the trap consists of an NSC, it is regenerated, as it is filled to convert the desorbed NOx into so-called "regeneration products".

The concepts of short-circuiting the NOx trap with the input of the internal combustion engine during the emptying/regeneration phase of the NOx trap remain unchanged.

According to this preferred variant of the invention it may be advantageous to use the aforementioned fuel metering means J arranged between the inlet of the bypass BPIN and ATS1 to favour heating of the NOx trap in addition to post-fuel injections in the engine cylinders E.

Furthermore, when a DPF is present in the first treatment portion, arranged upstream of the NOx trap, the presence of the DOC in the third ATS3 treatment portion favours the conversion of NOx to N02 which promotes the natural regeneration of the DPF.

In Figure 2a, more suitable for light duty applications, the cDPF is upstream of the LNT to facilitate a natural emptying of carbon deposits by the NOx generated or recirculated through the engine E.

However, when regenerating it reaches temperatures of 550 - 650°C leading to ageing of the NOx trap.

According to a preferred ATS control strategy, when the DPF is arranged upstream of the NOx trap, before starting the emptying of the NOx trap, the aforementioned first valve downstream of the NOx trap is switched, enabling the EGRP bypass duct, and then the relative metering device is controlled to obtain an overall lambda at the inlet of the first portion of the ATS slightly greater than 1, i.e. 1.01 and 1.2. This favours both the temperature increase and the emptying of the DPF, since residual oxygen is necessary for the combustion of the particulate accumulated in the DPF. After this phase, the emptying/regeneration of the NOx trap begins, and the relative metering device is controlled to obtain a total lambda at the inlet of the first portion of the ATS slightly less than 1, i.e. between 0.8 and 0.99. This promotes the desorption of N02 stored in the NOx trap. At the end of emptying/regeneration, the first FP valve is re-switched disabling the bypass duct.

When the NOx trap is arranged upstream of the DPF, after emptying the NOx trap, it may be advantageous to pilot an emptying of the DPF.

In this case, the metering device J is controlled inversely to what is described above, i.e. a first phase with lambda between 0.8 and 0.99 to promote the desorption of NOx, which in itself helps to neutralize the carbon residues accumulated in the DPF. Subsequently, the lambda is brought to values above the unit, i.e. between 1.01 and 1.2 so as to allow such neutralisation by the residual oxygen contained in the exhaust gases.

Advantageously, since the emptying of the DPF is exothermic, consequently its temperature starts to rise thanks to the desorption of NOx from the PNA or of the NH3 from the NSC, in the first phase of emptying/regeneration there is a mutual abatement of HC, PM and NOx. All this minimizes the amount of fuel needed to empty the PNA (or regenerate the NSC) for the regenerations of the DPF (or GPF).

According to any of the variants described above, it is understood that the SCR is of the active type, i.e. it comprises its own urea-based reducing agent metering device arranged immediately upstream of the SCR or SCRoF matrix to allow the conversion of NOx.

In the figures it can be seen that the internal combustion engine E is equipped with a turbo-compressor unit, in which a turbine T arranged on the exhaust pipe is guided in rotation by exhaust gases and, in turn, guides in rotation a compressor C, arranged on the intake pipe, which superpowers the motor E.

Figures 1 and 3 shows an optional high pressure EGR device comprising an EGRHP recirculation pipe that short-circuits the exhaust pipe upstream of the turbine with the intake pipe downstream of the compressor. In the manner in itself known, an EGRHV control valve and an EGRHC cooler may be provided.

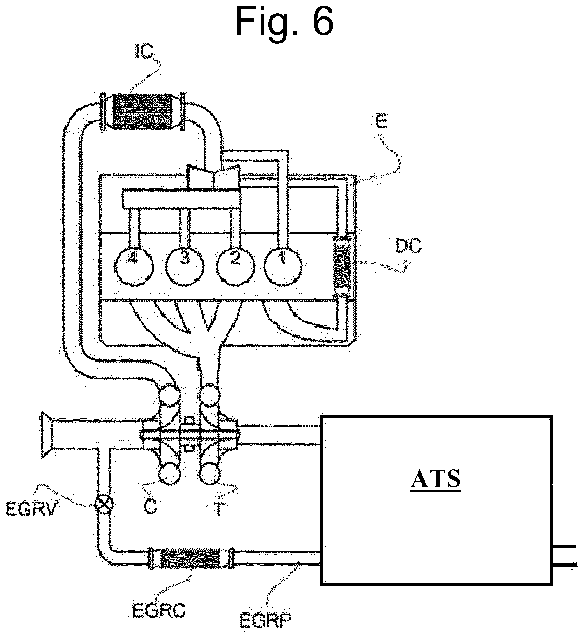

Figure 6 shows instead a configuration with a donor cylinder, in itself known, in which the ATS is configured as described above.

The exhaust manifold of this donor cylinder is connected to the intake pipe of the internal combustion engine at a second point, downstream of said first point, so as to achieve constant high pressure EGR.

Advantageously, the fact of having an "additional" EGR device compared to EGRP, allows for greater freedom of manoeuvre during the emptying of the PNA or regeneration of the NSC, it being possible to control the regulation of the EGRV valve solely as a function of emptying.

In other words, the portion of exhaust gas passing through the first portion of ATS can be limited to very low values even when a much higher target EGR is required due to the presence of the donor cylinder. This allows for the realization of PNA emptying or regeneration of the NSC at low engine load.

The variants described above are particularly suitable for diesel engines.

In the case of a positive-ignition engine and therefore adapted to be fuelled with petrol or natural gas or liquefied petroleum gas (LPG), it can be provided that the ATS2 comprises a three-way catalyst, well known to the person skilled in the art, instead of the SCR possibly followed by a CUC.

While those devices indicated as DPF in the figures are replaced by the equivalent GPF (Gasoline Particulate Filter).

It is not necessary for the GPF to be loaded so as to be oxidizing for the exhaust temperatures of these motors almost always higher than that of self-ignition of the particulate matter itself.

According to a preferred implementation of the invention ATS operation is taken care of by the engine control unit (ECU) that controls the operation of the internal combustion engine.

From what is described it is understood that the first portion ATS1, the second portion ATS2 and possibly the third portion ATS3 are preferably made with completely separate cannings.

The present invention may advantageously be realized by a computer program comprising encoding means for the realization of one or more steps of the method, when this program is run on a computer. As a result, it is understood that the scope of protection extends to said computer program and further to computer-readable means comprising a recorded message, said computer-readable means comprising program encoding means for the realization of one or more steps of the method, when said program is run on a computer.

Embodiment variants are possible to the non-limiting example described, while remaining however within the scope of protection of the present invention.

From the above description, the person skilled in the art can realize the object of the invention without introducing further construction details. What is described in the chapter relating to the state of the art is only necessary for a better understanding of the invention and is not a declaration of the existence of what is described. In addition, if not specifically excluded in the detailed description, what is described in the state of the art chapter is to be considered as an integral part of the detailed description.

## Claims

1. An abatement system of pollutants produced by an internal combustion engine (E) having an intake pipe (IP) and an exhaust pipe (EP), the system comprising an (ATS) device for the abatement of pollutants contained in the exhaust gases produced by the internal combustion engine, wherein said ATS device comprises
- at least a first treatment portion (ATS1) of exhaust gas comprising a NOx (LNT)trap,
- a bypass duct (BP) adapted to bypass said first treatment portion arranged for connecting a first point, upstream of the first treatment portion (ATS1), with a second point, downstream of the first treatment portion,
- a recirculation pipe (EGRP) which connects a third point, arranged between said first treatment portion (ATS1) and said second point, with the intake pipe (IP) of the internal combustion engine,
- a first valve (FP) arranged to selectively cause,
- a first operating condition in which a transit of exhaust gas crossing said first treatment portion (ATS1) towards the external environment and consequent occlusion of said bypass duct is allowed
- a second operating condition in which a transit of exhaust gas crossing said first treatment portion (ATS1) towards said recirculation pipe and consequent opening of said bypass duct is allowed,
**characterized in that** the first treatment portion (ATS1) further comprises at least one device between a particulate filter (DPF) and a NOx conversion device (SCR), the NOx conversion device being arranged downstream of the NOx trap (LNT).

2. The system according to claim 1, wherein said first valve is configured to completely block said by-pass duct in said second operating condition.

3. The system according to claim 1 or 2, further comprising fuel metering means (J) adapted to introduce fuel into said first treatment portion,
wherein, when the internal combustion engine (E) is in operation, the system is configured to alternatively actuate
- said second operating condition, of emptying/regenerating the LNT, wherein said fuel metering means (J) are operative, introducing fuel into said first treatment portion,
- said first operating condition, wherein said fuel metering means are closed.

4. The system according to any one of the preceding claims 1 - 3, wherein said recirculation pipe (EGRP) comprises a second regulation valve (EGRV) arranged so as to adjust an exhaust gas flow through said first treatment portion (ATS1) and recirculated in the internal combustion engine's intake during said second operating condition.

5. The system according to claim 3, wherein said first treatment portion comprises said particulate filter (DPF), which is arranged upstream of the NOx (LNT) trap; the system being configured to carry out the following steps in succession:
- switching said valve (FP) so as to cause said recirculation of gas through said first treatment portion,
- adjusting said fuel metering means so as to obtain a total lambda at the inlet of the first treatment portion slightly greater than 1, namely between 1.01 and 1.2, so as to obtain a regeneration of said particulate filter;
- adjusting said fuel metering means so as to obtain a total lambda at the inlet of the first treatment portion, slightly less than 1, more specifically between 0.8 and 0.99, so as to obtain a regeneration of said NOx (LNT) trap.

6. The system according to claim 3, wherein said first treatment portion comprises said particulate filter (DPF), which is arranged downstream of the NOx trap; the system being configured to carry out the following steps in succession:
- switching said valve (FP) so as to cause said recirculation of gas through said first treatment portion,
adjusting said fuel metering means so as to obtain a total lambda at the inlet of the first treatment portion, slightly less than 1, more specifically between 0.8 and 0.99, so as to realise a regeneration of said NOx (LNT) trap;
- adjusting said fuel metering means so as to obtain a total lambda at the inlet of the first treatment portion slightly greater than 1, namely between 1.01 and 1.2, so as to obtain a regeneration of said particulate filter.

7. The system according to any one of the preceding claims from 1 to 6, wherein said ATS further comprises a second treatment portion (ATS2) arranged downstream of said second point.

8. The system according to claim 7, wherein said second treatment portion (ATS2) comprises in succession a DOC, a particulate filter, a NOx conversion device and wherein the system is configured for keeping
- said first valve (FP) in said second operating condition, and
- said second valve (EGRV) closed,
when, after a step of emptying/regenerating said NOx (LNT) trap, said NOx conversion device has reached a relative activation temperature, so as to completely isolate said NOx trap.

9. The system according to claim 7, wherein said second treatment portion comprises at least one NOx conversion device (SCR).

10. The system according to claim 9, the system being configured to keep said first valve in said first operating condition when, after emptying/regenerating said NOx trap (LNT), said NOx conversion device has reached an activation temperature.

11. The system according to any one of the previous claims from 1 to 10, further comprising a third treatment portion (ATS3), comprising a DOC and/or an oxidant filled particulate filter (platinum filled DPF), arranged upstream of said first point.

12. The system according to any one of the claims from 8 to 10, wherein the system is configured to keep
- said first valve (FP) in said second operating condition, and
- said second valve (EGRV) closed,
when, after a step of emptying/regenerating said NOx trap, said NOx conversion device has reached a relative activation temperature, so as to completely isolate said NOx trap (LNT).

13. The system according to any one of the preceding claims 8 - 10, wherein if said internal combustion engine is of a diesel cycle type, said NOx conversion device contained in said second treatment portion (ATS2) is an active SCR and said particulate filter is a DPF and wherein if said internal combustion engine is of the Otto cycle type, said NOx conversion device contained in said second treatment portion (ATS2) is a three-way catalyst and said particulate filter is a GPF.

14. The system according to any one of the preceding claims 3 - 13, wherein said fuel metering means comprise an injector arranged for injecting fuel into a cylinder during an exhaust step and/or comprising a nozzle arranged on the exhaust pipe between said first point and an inlet of said first treatment device (ATS1).

15. The system according to any one of the preceding claims from 1 to 11, wherein said NOx trap (LNT) is an NSC and wherein said first treatment portion (ATS1) includes said NOx conversion device, which is defined by a passive SCR (pSCR) arranged downstream of said NSC to neutralize NOx passing through and/or released by said NSC by means of ammonia produced by said NSC.

16. The system according to any one of the preceding claims, wherein said first treatment portion is divided into two distinct cannings, wherein in a first canning proximal to said first point said NOx trap is arranged and in a second canning proximal to said second point at least one active SCR is arranged and wherein between said first and second canning means are arranged for injecting a urea-based reducing agent into the flow of exhaust gas passing through said first treatment portion (ATS1).

17. The system according to any one of the previous claims, wherein said by-pass duct defines a further first treatment portion (ATS1') identical and mutually parallel to said first treatment portion and comprising a further relative recirculation pipe (EGRP') which connects a point between said further treatment portion (ATS1') and said second point to the intake pipe (IP) of the internal combustion engine and a relative first valve (FP') arranged to selectively cause,
- a first operating condition in which a transit of exhaust gas crossing said further first treatment portion (ATS1') towards the external environment is allowed
- a second operating condition in which a transit of exhaust gas crossing said further first treatment portion (ATS1') towards said further recirculation pipe is allowed.

18. An internal combustion engine having an intake pipe (IP) and an exhaust pipe (EP) and **characterised in that** it has a treatment system of relative pollutants according to any one of the preceding claims 1 - 17.

19. The engine according to claim 18, further comprising a turbo-compressor assembly (T, C) wherein said first treatment portion (ATS1) is arranged upstream or downstream of a turbine (T) of said turbo-compressor assembly and said recirculation pipe is connected to said exhaust pipe respectively upstream or downstream of a compressor of said turbo-compressor assembly.

20. The engine according to the claims 18 or 19, further comprising a processing unit (ECU) configured to control said first and second operating conditions and configured for
- controlling said fuel metering means (J),
- controlling the calibration of a fuel injection in at least one cylinder of the internal combustion engine in said second operating condition taking into account the recirculated compounds.

21. The engine according to any one of the claims 18 - 19, wherein said engine control unit (ECU) is further configured for minimising a production of NOx by the internal combustion engine only during said second operating condition.

22. An abatement method for pollutants produced by an internal combustion engine (E) comprising an intake pipe (IP) and an exhaust pipe (EP), a device (ATS) for the abatement of pollutants contained in the exhaust gases produced by the internal combustion engine, having a first treatment portion (ATS1) for exhaust gas comprising a NOx trap (LNT), the method comprising, during an emptying/regeneration of said first treatment portion (ATS1) the step of by-passing said first treatment portion so that only a first portion of exhaust gasses passes through said first treatment portion and recirculates entirely upstream of the internal combustion engine, while a second portion of exhaust gas is directly directed towards a second treatment portion (ATS2) or external environment, so that said internal combustion engine can serve as combustor of the NOx and /or other regeneration products released by said NOx trap (LNT) during said emptying/regeneration,
wherein the first treatment portion (ATS1) further comprises at least one device between a particulate filter (DPF) and a NOx conversion device (SCR), the NOx conversion device being arranged downstream of the NOx trap (LNT).

## Patentansprüche

1. Minderungssystem für Schadstoffe, die durch eine Brennkraftmaschine (E), die eine Einlassleitung (IP) und eine Auslassleitung (EP) besitzt, erzeugt werden, wobei das System eine ATS-Vorrichtung zur Minderung von Schadstoffen, die in den Abgasen, die durch die Brennkraftmaschine erzeugt werden, enthalten sind, umfasst und die ATS-Vorrichtung Folgendes umfasst:
- mindestens einen ersten Behandlungsabschnitt (ATS1) für Abgas, der einen NOx-LNT-Abscheider umfasst,
- einen Umgehungskanal (BP), der ausgelegt ist, den ersten Behandlungsabschnitt, der zum Verbinden eines ersten Punkts stromaufwärts des ersten Behandlungsabschnitts (ATS1) mit einem zweiten Punkt stromabwärts des ersten Behandlungsabschnitts ausgelegt ist, zu umgehen,
- eine Rückführungsleitung (EGRP), die einen dritten Punkt, der zwischen dem ersten Behandlungsabschnitt (ATS1) und dem zweiten Punkt angeordnet ist, mit der Einlassleitung (IP) der Brennkraftmaschine verbindet,
- ein erstes Ventil (FP), das ausgelegt ist, wahlweise Folgendes zu verursachen:
- einen ersten Betriebszustand, in dem ein Durchleiten des Abgases, das den ersten Behandlungsabschnitt (ATS1) durchläuft, zur externen Umgebung und eine folgende Verdeckung des Umgehungskanals ermöglicht wird, und
- einen zweiten Betriebszustand, in dem ein Durchleiten des Abgases, das den ersten Behandlungsabschnitt (ATS1) durchläuft, zur Rückführungsleitung und eine folgende Öffnung des Umgehungskanals ermöglicht wird,
**dadurch gekennzeichnet, dass** der erste Behandlungsabschnitt (ATS1) ferner mindestens eine Vorrichtung zwischen einem Partikelfilter (DPF) und einer NOx-Umwandlungsvorrichtung (SCR) umfasst, wobei die NOx-Umwandlungsvorrichtung stromabwärts des NOx-LNT-Abscheiders angeordnet ist.

2. System nach Anspruch 1, wobei das erste Ventil konfiguriert ist, den Umgehungskanal im zweiten Betriebszustand vollständig zu blockieren.

3. System nach Anspruch 1 oder 2, das ferner ein Kraftstoffdosiermittel (J) umfasst, das ausgelegt ist, Kraftstoff in den ersten Behandlungsabschnitt einzuleiten, wobei das System konfiguriert ist, dann, wenn die Brennkraftmaschine (E) in Betrieb ist, alternativ Folgendes auszulösen:
- den zweiten Betriebszustand des Leerens/Regenerierens des LNT, in dem das Kraftstoffdosiermittel (J) derart arbeitet, dass es den Kraftstoff in den ersten Behandlungsabschnitt einleitet, und
- den ersten Betriebszustand, in dem das Kraftstoffdosiermittel geschlossen ist.

4. System nach einem der vorhergehenden Ansprüche 1-3, wobei die Rückführungsleitung (EGRP) ein zweites Steuerventil (EGRV) umfasst, das ausgelegt ist, während des zweiten Betriebszustands einen Abgasstrom durch den ersten Behandlungsabschnitt (ATS1), der in den Einlass der Brennkraftmaschine zurückgeführt wird, anzupassen.

5. System nach Anspruch 3, wobei der erste Behandlungsabschnitt das Partikelfilter (DPF) umfasst, das stromaufwärts des NOx-LNT-Abscheiders angeordnet ist; und das System konfiguriert ist, die folgenden Schritte nacheinander auszuführen:
- Umschalten des Ventils (FP), um die Rückführung von Gas durch den ersten Behandlungsabschnitt zu verursachen,
- Anpassen des Kraftstoffdosiermittels, um beim Einlass des ersten Behandlungsabschnitts ein Gesamtlambda etwas größer als 1, und zwar zwischen 1,01 und 1,2 zu erhalten, um eine Regeneration des Partikelfilters zu erreichen; und
- Anpassen des Kraftstoffdosiermittels, um beim Einlass des ersten Behandlungsabschnitts ein Gesamtlambda etwas kleiner als 1, insbesondere zwischen 0,8 und 0,99 zu erhalten, um eine Regeneration des NOx-LNT-Abscheiders zu erreichen.

6. System nach Anspruch 3, wobei der erste Behandlungsabschnitt das Partikelfilter (DPF), das stromabwärts des NOx-Abscheiders angeordnet ist, umfasst und das System konfiguriert ist, die folgenden Schritte nacheinander auszuführen:
- Umschalten des Ventils (FP), um die Rückführung des Gases durch den ersten Behandlungsabschnitt zu verursachen,
Anpassen des Kraftstoffdosiermittels, um beim Einlass des ersten Behandlungsabschnitts ein Gesamtlambda etwas kleiner als 1, insbesondere zwischen 0,8 und 0,99 zu erhalten, um eine Regeneration des NOx-LNT-Abscheiders zu realisieren; und
- Anpassen des Kraftstoffdosiermittels, um ein Gesamtlambda beim Einlass des ersten Behandlungsabschnitts etwas größer als 1, nämlich zwischen 1,01 und 1,2 zu erhalten, um eine Regeneration des Partikelfilters zu erreichen.

7. System nach einem der vorhergehenden Ansprüche 1 bis 6, wobei das ATS ferner einen zweiten Behandlungsabschnitt (ATS2) umfasst, der stromabwärts des zweiten Punkts angeordnet ist.

8. System nach Anspruch 7, wobei der zweite Behandlungsabschnitt (ATS2) nacheinander einen DOC, ein Partikelfilter und eine NOx-Umwandlungsvorrichtung umfasst und das System konfiguriert ist zum Halten
- des ersten Ventils (FP) im zweiten Betriebszustand und
- des zweiten Ventils (EGRV) im geschlossenen Zustand,
wenn die NOx-Umwandlungsvorrichtung nach einem Schritt des Leerens/Regenerierens des NOx-LNT-Abscheiders eine jeweilige Aktivierungstemperatur erreicht hat, um den NOx-Abscheider vollständig zu isolieren.

9. System nach Anspruch 7, wobei der zweite Behandlungsabschnitt mindestens eine NOx-Umwandlungsvorrichtung (SCR) umfasst.

10. System nach Anspruch 9, wobei das System konfiguriert ist, das erste Ventil im ersten Betriebszustand zu halten, wenn die NOx-Umwandlungsvorrichtung nach dem Leeren/Regenerieren des NOx-LNT-Abscheiders eine Aktivierungstemperatur erreicht hat.

11. System nach einem der vorhergehenden Ansprüche 1 bis 10, das ferner einen dritten Behandlungsabschnitt (ATS3) umfasst, der einen DOC und/oder ein oxidationsmittelgefülltes Partikelfilter (platingefülltes DPF), die stromaufwärts des ersten Punkts angeordnet sind, umfasst.

12. System nach einem der Ansprüche 8 bis 10, wobei das System konfiguriert ist zum Halten
- des ersten Ventils (FP) im zweiten Betriebszustand und
- des zweiten Ventils (EGRV) geschlossen,
wenn die NOx-Umwandlungsvorrichtung nach einem Schritt des Leerens/Regenerierens des NOx-Abscheiders eine jeweilige Aktivierungstemperatur erreicht hat, um den NOx-Abscheider (LNT) vollständig zu isolieren.

13. System nach einem der vorhergehenden Ansprüche 8-10, wobei dann, wenn die Brennkraftmaschine von einem Diesel-Zyklustyp ist, die NOx-Umwandlungsvorrichtung, die im zweiten Behandlungsabschnitt (ATS2) enthalten ist, eine aktive SCR ist und das Partikelfilter ein DPF ist und wobei dann, wenn die Brennkraftmaschine vom Otto-Zyklustyp ist, die NOx-Umwandlungsvorrichtung, die im zweiten Behandlungsabschnitt (ATS2) enthalten ist, ein Dreiwegekatalysator ist und das Partikelfilter ein GPF ist.

14. System nach einem der vorhergehenden Ansprüche 3-13, wobei das Kraftstoffdosiermittel einen Injektor, der zum Einspritzen des Kraftstoffs in einen Zylinder während eines Auslassschritts ausgelegt ist, umfasst und/oder eine Düse, die an der Auslassleitung zwischen dem ersten Punkt und einem Einlass der ersten Behandlungsvorrichtung (ATS1) angeordnet ist, umfasst.

15. System nach einem der vorhergehenden Ansprüche 1 bis 11, wobei der NOx-Abscheider (LNT) ein NSC ist und wobei der erste Behandlungsabschnitt (ATS1) die NOx-Umwandlungsvorrichtung enthält, die durch eine passive SCR (pSCR) definiert ist, die stromabwärts des NSC angeordnet ist, um Nox, das den NSC durchläuft und/oder durch ihn freigegeben wird, mittels Ammoniaks, das durch den NSC erzeugt wird, zu neutralisieren.

16. System nach einem der vorhergehenden Ansprüche, wobei der erste Behandlungsabschnitt zwei verschiedene Eindosungen geteilt ist, in einer ersten Eindosung, die nahe dem ersten Punkt liegt, der NOx-Abscheider angeordnet ist und in einer zweiten Eindosung, die nahe dem zweiten Punkt liegt, mindestens eine aktive SCR angeordnet ist und zwischen der ersten und der zweiten Eindosung Mittel zum Einspritzen eines harnstoffbasierten Reduktionsmittels in den Strom des Abgases, das den ersten Behandlungsabschnitt (ATS1) durchläuft, angeordnet sind.

17. System nach einem der vorhergehenden Ansprüche, wobei der Umgehungskanal einen weiteren ersten Behandlungsabschnitt (ATS1') definiert, der identisch und wechselseitig parallel zum ersten Behandlungsabschnitt ist und eine weitere jeweilige Rückführungsleitung (EGRP'), die einen Punkt zwischen dem weiteren Behandlungsabschnitt (ATS1') und dem zweiten Punkt mit der Einlassleitung (IP) der Brennkraftmaschine verbindet, und ein jeweiliges erstes Ventil (FP'), das ausgelegt ist, wahlweise Folgendes auszulösen, umfasst:
- einen ersten Betriebszustand, in dem ein Durchleiten des Abgases, das den weiteren ersten Behandlungsabschnitt (ATS1') durchläuft, zur Außenumgebung ermöglicht ist, und
- einen zweiten Betriebszustand, in dem eine Durchleiten des Abgases, das den weiteren ersten Behandlungsabschnitt (ATS1') durchläuft, zur weiteren Rückführungsleitung ermöglicht ist.

18. Brennkraftmaschine, die eine Einlassleitung (IP) und eine Auslassleitung (EP) besitzt und durch ein Behandlungssystem jeweiliger Schadstoffe nach einem der vorhergehenden Ansprüche 1-17 gekennzeichnet ist.

19. Kraftmaschine nach Anspruch 18, die ferner eine Turboverdichteranordnung (T, C) umfasst, wobei der erste Behandlungsabschnitt (ATS1) stromaufwärts oder stromabwärts einer Turbine (T) der Turboverdichteranordnung angeordnet ist und die Rückführungsleitung stromaufwärts bzw. stromabwärts eines Kompressors der Turboverdichteranordnung mit der Auslassleitung verbunden ist.

20. Kraftmaschine nach Anspruch 18 oder 19, die ferner eine Verarbeitungseinheit (ECU) umfasst, die konfiguriert ist, den ersten und den zweiten Betriebszustand zu steuern, und konfiguriert ist zum
- Steuern des Kraftstoffdosiermittels (J) und
- Steuern der Kalibrierung eines Kraftstoffeinspritzens in mindestens einen Zylinder der Brennkraftmaschine im zweiten Betriebszustand unter Berücksichtigung der zurückgeführten Verbundstoffe.

21. Kraftmaschine nach einem der Ansprüche 18-19, wobei die Kraftmaschinensteuereinheit (ECU) ferner konfiguriert ist zum Minimieren einer Produktion von NOx durch die Brennkraftmaschine lediglich während des zweiten Betriebszustands.

22. Minderungssystem für Schadstoffe, die durch eine Brennkraftmaschine (E), die eine Einlassleitung (IP) und eine Auslassleitung (EP) umfasst, erzeugt werden, wobei eine Vorrichtung (ATS) zur Minderung von Schadstoffen, die in den Abgasen, die durch die Brennkraftmaschine erzeugt werden, enthalten sind, einen ersten Behandlungsabschnitt (ATS1) für Abgas, der einen NOx-Abscheider (LNT) umfasst, aufweist und das Verfahren während eines Leerens/Regenerierens des ersten Behandlungsabschnitts (ATS1) den Schritt des Umgehens des ersten Behandlungsabschnitts umfasst, derart, dass lediglich ein erster Anteil von Abgasen den ersten Behandlungsabschnitt durchläuft und vollständig stromaufwärts der Brennkraftmaschine zurückführt wird, während ein zweiter Anteil des Abgases direkt zu einem zweiten Behandlungsabschnitt (ATS2) oder der Außenumgebung geleitet wird, derart, dass die Brennkraftmaschine als Brennkammervorrichtung des NOx und/oder weiterer Regenerationsprodukte, die durch den NOx-Abscheider (LNT) während das Leerens/Regenerierens freigegeben werden, dienen kann, wobei
der erste Behandlungsabschnitt (ATS1) ferner mindestens eine Vorrichtung zwischen einem Partikelfilter (DPF) und einer NOx-Umwandlungsvorrichtung (SCR) umfasst, wobei die NOx-Umwandlungsvorrichtung stromabwärts des NOx-Abscheiders (LNT) angeordnet ist.

## Revendications

1. Système de réduction de polluants produits par un moteur à combustion interne (E) ayant une tubulure d'admission (IP) et une tubulure d'échappement (EP), le système comprenant un dispositif (ATS) pour la réduction de polluants contenus dans les gaz d'échappement produits par le moteur à combustion interne, dans lequel ledit dispositif ATS comprend
- au moins une première partie de traitement (ATS1) de gaz d'échappement comprenant un piège à NOx (LNT),
- une conduite de dérivation (BP) adaptée pour éviter ladite première partie de traitement disposée de manière à connecter un premier point, en amont de la première partie de traitement (ATS1), avec un deuxième point, en aval de la première partie de traitement,
- une tubulure de recirculation (EGRP) qui connecte un troisième point, disposé entre ladite première partie de traitement (ATS1) et ledit deuxième point, avec la tubulure d'admission (IP) du moteur à combustion interne,
- une première vanne (FP) disposée de manière à provoquer sélectivement
- une première condition de fonctionnement dans laquelle le transit du gaz d'échappement traversant ladite première partie de traitement (ATS1) en direction de l'environnement extérieur et une fermeture en conséquence de ladite conduite de dérivation sont autorisés,
- une deuxième condition de fonctionnement dans laquelle le transit du gaz d'échappement traversant ladite première partie de traitement (ATS1) en direction de l'environnement extérieur et une ouverture en conséquence de ladite conduite de dérivation sont autorisés,
**caractérisé en ce que** la première partie de traitement (ATS1) comprend en outre au moins un dispositif entre un filtre à particules (DPF) et un dispositif de conversion de NOx (SCR), le dispositif de conversion de NOx étant disposé en aval du piège à NOx (LNT).

2. Système selon la revendication 1, dans lequel ladite première vanne est configurée pour bloquer complètement ladite conduite de dérivation dans ladite deuxième condition de fonctionnement.

3. Système selon la revendication 1 ou 2, comprenant en outre un moyen de dosage de carburant (J) adapté pour introduire du carburant dans ladite première partie de traitement,
dans lequel, quand le moteur à combustion interne (E) est en fonctionnement, le système est configuré pour actionner en alternance
- ladite deuxième condition de fonctionnement, consistant à vider/régénérer le LNT, dans laquelle ledit moyen de dosage de carburant (J) est opérationnel, en introduisant du carburant dans ladite première partie de traitement,
- ladite première condition de fonctionnement, dans laquelle ledit moyen de dosage de carburant est fermé.

4. Système selon l'une quelconque des revendications 1 à 3, dans lequel ladite tubulure de recirculation (EGRP) comprend une deuxième vanne de régulation (EGRV) disposée de manière à ajuster le courant de gaz d'échappement à travers ladite première partie de traitement (ATS1) qui a recirculé dans l'admission du moteur à combustion interne durant ladite deuxième condition de fonctionnement.

5. Système selon la revendication 3, dans lequel ladite première partie de traitement comprend ledit filtre à particules (DPF), qui est disposé en amont du piège à NOx (LNT) ; le système étant configuré pour effectuer les étapes suivantes successivement :
- commutation de ladite vanne (FP) de façon à provoquer ladite recirculation de gaz à travers ladite première partie de traitement,
- ajustement dudit moyen de dosage de carburant de façon que soit obtenue une valeur lambda totale à l'entrée de la première partie de traitement légèrement supérieure à 1, à savoir entre 1,01 et 1,2, de façon que soit obtenue une régénération dudit filtre à particules ;
- ajustement dudit moyen de dosage de carburant de façon que soit obtenue une valeur lambda totale à l'entrée de la première partie de traitement légèrement inférieure à 1, plus spécifiquement entre 0,8 et 0,99, de façon que soit obtenue une régénération dudit piège à NOx (LNT).

6. Système selon la revendication 3, dans lequel ladite première partie de traitement comprend ledit filtre à particules (DPF), qui est disposé en aval du piège à NOx; le système étant configuré pour effectuer les étapes suivantes successivement :
- commutation de ladite vanne (FP) de façon à provoquer ladite recirculation de gaz à travers ladite première partie de traitement,
- ajustement dudit moyen de dosage de carburant de façon que soit obtenue une valeur lambda totale à l'entrée de la première partie de traitement légèrement inférieure à 1, plus spécifiquement entre 0,8 et 0,99, de façon que soit réalisée une régénération dudit piège à NOx (LNT) ;
- ajustement dudit moyen de dosage de carburant de façon que soit obtenue une valeur lambda totale à l'entrée de la première partie de traitement légèrement supérieure à 1, à savoir entre 1,01 et 1,2, de façon que soit obtenue une régénération dudit filtre à particules.

7. Système selon l'une quelconque des revendications 1 à 6, dans lequel ledit ATS comprend en outre une deuxième partie de traitement (ATS2) disposée en aval dudit deuxième point.

8. Système selon la revendication 7, dans lequel ladite deuxième partie de traitement (ATS2) comprend successivement un DOC (catalyseur oxydant pour diésel), un filtre à particules, un dispositif de conversion de NOx, et lequel système est configuré pour maintenir
- ladite première vanne (FP) dans ladite deuxième condition de fonctionnement, et
- ladite deuxième vanne (EGRV) fermée,
quand, après une étape de vidage/régénération dudit piège à NOx (LNT), ledit dispositif de conversion de NOx a atteint une température d'activation relative, de façon que ledit piège à NOx soit complètement isolé.

9. Système selon la revendication 7, dans lequel ladite deuxième partie de traitement comprend au moins un dispositif de conversion de NOx (SCR).

10. Système selon la revendication 9, le système étant configuré pour maintenir ladite première vanne dans ladite première condition de fonctionnement quand, après vidage/régénération dudit piège à NOx (LNT), ledit dispositif de conversion de NOx a atteint une température d'activation.

11. Système selon l'une quelconque des revendications 1 à 10, comprenant en outre une troisième partie de traitement (ATS3), comprenant un DOC et/ou un filtre à particules chargé d'oxydant (DPF chargé de platine), disposés en amont dudit premier point.

12. Système selon l'une quelconque des revendications 8 à 10, lequel système est configuré pour maintenir
- ladite première vanne (FP) dans ladite deuxième condition de fonctionnement, et
- ladite deuxième vanne (EGRV) fermée,
quand, après une étape de vidage/régénération dudit piège à NOx, ledit dispositif de conversion de NOx a atteint une température d'activation relative, de façon que ledit piège à NOx (LNT) soit complètement isolé.

13. Système selon l'une quelconque des revendications 8 à 10, dans lequel, si ledit moteur à combustion interne est du type à cycle diésel, ledit dispositif de conversion de NOx contenu dans ladite deuxième partie de traitement (ATS2) est un SCR actif et ledit filtre à particules est un DPF, et dans lequel, si ledit moteur à combustion interne est du type à cycle à quatre temps, ledit dispositif de conversion de NOx contenu dans ladite deuxième partie de traitement (ATS2) est un catalyseur à trois voies et ledit filtre à particules est un GPF.

14. Système selon l'une quelconque des revendications 3 à 13, dans lequel ledit moyen de dosage de carburant comprend un injecteur disposé de manière à injecter du carburant dans un cylindre durant une étape d'échappement et/ou comprenant une buse disposée sur la tubulure d'échappement entre ledit premier point et une entrée dudit premier dispositif de traitement (ATS1).

15. Système selon l'une quelconque des revendications 1 à 11, dans lequel ledit piège à NOx (LNT) est un NSC et dans lequel ladite première partie de traitement (ATS1) comprend ledit dispositif de conversion de NOx, qui est défini par un SCR passif (pSCR) disposé en aval dudit NSC pour neutraliser les NOx traversant et/ou libérés par ledit NSC au moyen d'ammoniac produit par ledit NSC.

16. Système selon l'une quelconque des revendications précédentes, dans lequel ladite première partie de traitement est divisée en deux gainages distincts, dans lequel, dans un premier gainage à proximité dudit premier point, est disposé ledit piège à NOx et, dans un deuxième gainage à proximité dudit deuxième point, est disposé au moins un SCR actif, et dans lequel, entre lesdits premier et deuxième gainages, est disposé un moyen pour injecter un agent réducteur à base d'urée dans le courant de gaz d'échappement traversant ladite première partie de traitement (ATS1).

17. Système selon l'une quelconque des revendications précédentes, dans lequel ladite conduite de dérivation définit une autre première partie de traitement (ATS1') identique et mutuellement parallèle à ladite partie de traitement et comprenant une autre tubulure de recirculation relative (EGRP') qui connecte un point entre ladite autre partie de traitement (ATS1') et ledit deuxième point à la tubulure d'admission (IP) du moteur à combustion interne et une première vanne relative (FP') disposée de manière à provoquer sélectivement
- une première condition de fonctionnement dans laquelle le transit du gaz d'échappement traversant ladite autre première partie de traitement (ATS1') en direction de l'environnement extérieur est autorisé,
- une deuxième condition de fonctionnement dans laquelle le transit du gaz d'échappement traversant ladite autre première partie de traitement (ATS1') en direction de ladite autre tubulure de recirculation est autorisé.

18. Moteur à combustion interne ayant une tubulure d'admission (IP) et une tubulure d'échappement (EP) et **caractérisé en ce qu'**il a un système de traitement de polluants relatifs selon l'une quelconque des revendications 1 à 17.

19. Moteur selon la revendication 18, comprenant en outre un assemblage de turbocompresseur (T, C), dans lequel ladite première partie de traitement (ATS1) est disposée en amont ou en aval d'une turbine (T) dudit assemblage de turbocompresseur et ladite tubulure de recirculation est connectée à ladite tubulure d'échappement respectivement en amont ou en aval d'un compresseur dudit assemblage de turbocompresseur.

20. Moteur selon la revendication 18 ou 19, comprenant en outre une unité de traitement (ECU) configurée pour commander lesdites première et deuxième conditions de fonctionnement et configurée pour
- commander ledit moyen de dosage de carburant (J),
- commander l'étalonnage d'une injection de carburant dans au moins un cylindre du moteur à combustion interne dans ladite deuxième condition de fonctionnement en prenant en compte les composés ayant recirculé.

21. Moteur selon l'une quelconque des revendications 18 et 19, dans lequel ladite unité de commande de moteur (ECU) est en outre configurée pour minimiser la production de NOx par le moteur à combustion interne uniquement durant ladite deuxième condition de fonctionnement.

22. Procédé de réduction de polluants produits par un moteur à combustion interne (E) comprenant une tubulure d'admission (IP) et une tubulure d'échappement (EP), un dispositif (ATS) pour la réduction de polluants contenus dans les gaz d'échappement produits par le moteur à combustion interne, ayant une première partie de traitement (ATS1) de gaz d'échappement comprenant un piège à NOx (NLT), le procédé comprenant, durant un vidage/régénération de ladite première partie de traitement (ATS1), l'étape d'évitement de ladite première partie de traitement de façon que seule une première partie des gaz d'échappement traverse ladite première partie de traitement et recircule entièrement en amont du moteur à combustion interne, tandis qu'une deuxième partie du gaz d'échappement est directement dirigée vers une deuxième partie de traitement (ATS2) ou l'environnement extérieur, de façon que ledit moteur à combustion interne puisse servir de chambre de combustion des NOx et/ou d'autres produits de régénération libérés par ledit piège à NOx (LNT) durant ledit vidage/régénération,
dans lequel la première partie de traitement (ATS1) comprend en outre au moins un dispositif entre un filtre à particules (DPF) et un dispositif de conversion de NOx (SCR), le dispositif de conversion de NOx étant disposé en aval du piège à NOx (LNT).
